# EUROPÄISCHE PATENTSCHRIFT

(11) **EP 3 503 247 B1**
(45) Veröffentlichungstag und Bekanntmachung des Hinweises auf die Patenterteilung: **30.09.2020**
(21) Anmeldenummer: 18000937.5
(22) Anmeldetag: 03.12.2018
(51) Int. Cl.: H01M 2/10, H01M 10/6557, H01M 10/613

(54) **BATTERIEKÜHLSYSTEM UND BATTERIEMODUL MIT EINEM VON KÜHLMEDIUM DURCHSTRÖMTEN MÄANDRIERENDEN WÄRMETAUSCHER**
BATTERY COOLING SYSTEM AND BATTERY MODULE WITH A MEANDERING HEAT EXCHANGER WITH COOLING MEDIUM FLOWING THROUGH IT
SYSTÈME DE REFROIDISSEMENT DE BATTERIE ET MODULE DE BATTERIE DOTÉ D'UN ÉCHANGEUR DE CHALEUR EN MÉANDRES PARCOURU PAR L'AGENT DE REFROIDISSEMENT

(30) Priorität: 19.12.2017 DE 102017011769
(43) Veröffentlichungstag der Anmeldung: 26.06.2019
(73) Patentinhaber: Custom Cells Itzehoe GmbH, 25524 Itzehoe (DE)
(72) Erfinder: Wolter, Christopher, 22529 Hamburg (DE); Thönnessen, Torge, 22605 Hamburg (DE); Permien, Stefan, 25335 Elmshorn (DE); Kraas, Sebastian, 22559 Hamburg (DE); Kock, Soenke, 25560 Schenefeld (DE)
(74) Vertreter: Weidner Stern Jeschke

(56) Entgegenhaltungen:
- DE-A1-102015 100 161
- DE-A1-102015 100 408
- DE-T2- 60 213 474
- US-A1- 2013 157 089

## Beschreibung

Die Erfindung betrifft ein Batteriekühlsystem gemäß dem Oberbegriff des Anspruchs 1, sowie ein Batteriemodul mit einer Mehrzahl von flachen, im Abstand parallel angeordneten Batteriezellen und einem solchen Batteriekühlsystem.

Bei vielen Anwendungen werden zur Bereitstellung von elektrischer Energie Energiespeichersysteme benötigt, zum Beispiel in Form von Batterien, die zweckmäßig aus einzelnen Batteriemodulen und diese wiederum aus einzelnen Batteriezellen bestehen, so dass die Speicherkapazität leicht an den Bedarf angepasst werden kann. Derartige Batterien können sowohl bei mobilen als auch bei stationären Anwendungen zum Einsatz kommen, zum Beispiel um den Elektromotor eines Fahrzeugs mit elektrischer Energie zu versorgen oder von einer Windkraft- oder Solar-Anlage erzeugte elektrischer Energie zu speichern.

In beiden Fällen werden größere Batteriemodule benötigt, die in der Regel aus einer Mehrzahl von einzelnen Batteriezellen zusammengesetzt sind. Insbesondere bei wieder-aufladbaren Batterien für mobile Anwendungen, wie Fahrzeugbatterien für Hybrid-, Plug-In-Hybrid- oder Elektro-Fahrzeuge, bestehen die Batteriemodule häufig aus Lithium-Ionen-Zellen. Dabei finden zumeist entweder Pouch-Zellen mit einer flexiblen Umhüllung oder sogenannte prismatische Zellen mit einem Metallgehäuse Verwendung, die beide eine flache quaderförmige Gestalt besitzen und sich besonders einfach und preiswert herstellen lassen. Bei der Fertigung der Batteriemodule werden diese Zellen in der Regel unter Bildung eines Batteriezellenstapels vertikal oder horizontal übereinander gestapelt, wobei sich benachbarte Zellen mit ihren Breitseiten gegenüberliegen.

Lithium-Ionen-Zellen bzw. Batteriemodule aus Lithium-Ionen-Zellen müssen in einem bestimmten Temperaturbereich betrieben werden, um bei hohen Lade- oder Entladelasten eine Erhitzung der Zellen bzw. Batteriemodule über eine bestimmte Temperatur hinaus zu vermeiden, was eine Verkürzung der Lebensdauer der Zellen und eine Verringerung der Lade/Entladekapazität der Batteriemodule zur Folge hätte. Außerdem kann durch Kühlung der Zellen ein Sicherheitsrisiko infolge thermischen Durchgehens (thermal runaway) vermieden oder minimiert werden. Um eine übermäßige Erwärmung zu verhindern, umfassen Batteriemodule aus Lithiumlonen-Zellen in der Regel ein Batteriemanagementsystem (BMS) und ein Kühlsystem, die zur Regelung und Kontrolle bzw. zur Temperierung der Batteriezellen dienen.

Obwohl in der Regel eine Kühlung der Batteriezellen stattfinden wird, kann es unter Umständen auch erforderlich sein, den Batteriezellen Wärme zuzuführen, zum Beispiel bei niedrigen Umgebungstemperaturen. Im Rahmen dieser Patentanmeldung sollen sich daher Begriffe, wie "Kühlung", "Kühlsystem", "Kühlmedium" oder "Kühlkanäle" allgemein auf eine Temperierung der Zellen beziehen.

Bei der Entwicklung von Kühlsystemen von Batteriemodulen aus Lithium-Ionen-Zellen und insbesondere aus Pouch-Zellen muss berücksichtigt werden, dass das Volumen der Zellen während des Ladens und Entladens der Batterie zu- oder abnimmt. Das Batteriemodul muss daher so konzipiert werden, dass diese Volumenzunahme und -abnahme bei Lade- und Entladevorgängen kompensiert werden kann und nicht zu einem übermäßigen oder ungleichmäßigen Druck auf die verspannten Zellen führt.

Außerdem sollten sowohl das Kühlsystem und das Batteriemodul aus einfach und günstig herzustellenden Teilen bestehen und sich einfach zusammensetzen bzw. zum Austausch beschädigter Zellen zerlegen lassen.

Aus der DE 10 2015 100 408 A1, der DE 10 2015 100 161 A1, der US 2013/0157089 A1 und der DE 602 13 474 T2 sind bereits Batteriekühlsysteme der eingangs genannten Art mit einem Wärmetauscher bekannt, der schlangenförmig durch einen Batteriezellenstapel mäandriert. Infolge einer zunehmenden Erwärmung des Kühlmediums zwischen dem Einlass und dem Auslass des Wärmetauschers kann es jedoch zu einer unzureichenden Kühlung der Batteriezellen in der Nähe des Auslasses kommen.

Ausgehend hiervon liegt der Erfindung die Aufgabe zugrunde, ein Kühlsystem und ein Batteriemodul der eingangs genannten Art dahingehend zu verbessern, dass bei einfacher Montage und Demontage sowie einer hohen Flexibilität zur Kompensation von Volumenänderungen eine sehr gute und gleichmäßigere Kühlung der Zellen erzielt werden kann.

Zur Lösung dieser Aufgabe wird erfindungsgemäß vorgeschlagen, dass eine der beiden entgegengesetzten Oberflächen jeder Batteriezelle nur gegen eine einlassseitige Hälfte und die andere nur gegen eine auslassseitige Hälfte des Wärmetauschers anliegt. Als einlassseitige Hälfte des Wärmetauschers wird diejenige Hälfte hinter dem Einlass bezeichnet, während als auslassseitige Hälfte des Wärmetauschers diejenige Hälfte vor dem Auslass bezeichnet wird.

Durch die erfindungsgemäße Merkmalskombination steht eine Oberfläche oder Breitseite jeder Batteriezelle nur im Wärmekontakt mit "kälterem" Kühlmedium, das die einlassseitige Hälfte des Wärmetauschers durchströmt, während die entgegengesetzte Oberfläche oder Breitseite nur im Wärmekontakt mit "wärmerem" Kühlmedium steht, das die auslassseitige Hälfte durchströmt. An beiden Breitseiten jeder Zelle kann die Wärme großflächig direkt in den Wärmetauscher bzw. das durch diesen strömende Kühlmedium abgeleitet werden. Durch die flächige und bevorzugt ganzflächige Anlage bzw. eine vollständige Bedeckung der entgegengesetzten Oberflächen oder Breitseiten der Zellen mit dem Wärmetauscher wird zudem ein besonders guter Wärmeübergang erreicht. Durch den mäandrierenden Verlauf des Wärmetauschers ist dieser zudem nicht starr, sondern besitzt eine gewisse Nachgiebigkeit oder Elastizität, weil sich der Wärmetauscher in Richtung der Höhe des Batteriezellenstapels etwas reversibel dehnen kann, wenn sich das Volumen der Zellen während eines Lade- oder Entladevorgangs verändert.

Gleichzeitig übt der Wärmetauscher unabhängig vom Ladezustand einen gleichmäßigen Druck auf die Zellen aus. Darüber hinaus bildet der Wärmetauscher auch noch eine Halterung für die Batteriezellen, die zwischen zwei benachbarte parallele Abschnitte des mäandrierenden Wärmetauschers eingeführt oder eingeschoben werden, wodurch der Wärmetauscher zu einem integralen Bestandteil des Batteriemoduls wird. Abgesehen vom Wärmeübergang durch die Wand des Wärmetauschers entfällt zudem ein Wärmetransport durch wärmeleitende Elemente, wodurch der Wärmetransport verbessert werden kann. Darüber hinaus kann der Wärmetauscher vollständig aus Teilen aus Leichtmetall, zum Beispiel aus Aluminium oder einer Aluminium-Legierung, gefertigt werden, die im Handel erhältlich sind, was die Fertigungskosten reduziert.

Vorzugsweise erstreckt sich der Wärmetauscher durch sämtliche Zwischenräume zwischen den Batteriezellen des Batteriemoduls bzw. des Batteriezellenstapels, so dass sämtliche Zellen gleichmäßig gekühlt werden.

Eine optimale gleichmäßige Kühlung wird erzielt, wenn das Kühlmedium die beiden Hälften des Wärmetauschers mit entgegengesetzter Strömungsrichtung durchströmt, d.h. die eine Hälfte von oben nach unten und die andere Hälfte von unten nach oben, wenn die Batteriezellen übereinander gestapelt sind bzw. die eine Hälfte von links nach rechts und die andere Hälfte von rechts nach links, wenn die Batteriezellen nebeneinander angeordnet sind. Auf diese Weise werden alle Batteriezellen sehr gleichmäßig gekühlt, weil der Mittelwert der Temperaturen des Kühlmediums an den beiden entgegengesetzten Oberflächen oder Breitseiten jeder Batteriezelle nahezu gleich groß ist. Außerdem können der Einlass und der Auslass des Wärmetauschers an derselben Seite angeordnet werden, ohne dass ein Verbindungsrohr erforderlich ist.

Um den benötigten Bauraum zu minimieren, besteht der Wärmetauscher mindestens teilweise aus flachen hohlen Leichtmetall-Strangpressprofilen mit geradlinigen Profilabschnitten, die sich durch die Zwischenräume zwischen den benachbarten Batteriezellen erstrecken und einen allgemein rechteckigen Querschnitt mit zwei ebenen Oberflächen, vorzugsweise Breitseiten, aufweisen, mit denen sie gegen die gegenüberliegenden Oberflächen bzw. Breitseiten der Zellen anliegen. Zur Versteifung sind die Strangpressprofile zweckmäßig durch mehrere parallele Trennwände in einzelne Kühlkanäle unterteilt.

Die zuvor erwähnte gleichmäßige Temperierung sämtlicher Batteriezellen des Batteriemoduls wird erreicht, wenn jede Zelle zwischen einem Strangpressprofil der einlassseitigen Hälfte des Wärmetauschers und einem Strangpressprofil der auslassseitigen Hälfte des Wärmetauschers angeordnet ist.

Dies kann mit relativ geringen Kosten erreicht werden, wenn die Strangpressprofile gemäß einer vorteilhaften Ausgestaltung der Erfindung U-förmig gebogen sind und jeweils zwei geradlinige Profilabschnitte und einen gebogenen Profilabschnitt zwischen den beiden geradlinigen Profilabschnitten aufweisen, so dass sie sich durch Biegen handelsüblicher Strangpressprofile sehr einfach herstellen lassen. Die geradlinigen Profilabschnitte erstrecken sich jeweils durch den Zwischenraum zwischen zwei benachbarten Zellen. Der gebogene Profilabschnitt ist seitlich vom Batteriezellenstapel angeordnet und besitzt vorzugsweise einen etwa der Dicke der Batteriezellen entsprechenden Krümmungsradius, so dass er sich über die Höhe von zwei Batteriezellen erstreckt und den Zwischenraum zwischen diesen beiden Zellen überbrückt.

Die U-förmig gebogenen Strangpressprofile der einlassseitigen Hälfte des Wärmetauschers bzw. der auslassseitigen Hälfte des Wärmetauschers ragen abwechselnd von entgegengesetzten Seiten her in die Zwischenräume des Batteriezellenstapels, was die Fertigung vereinfacht und bei einer Volumenvergrößerung der Zellen für eine gleichmäßige Dehnung des Wärmetauschers sorgt.

Neben den Strangpressprofilen umfasst der Wärmetauscher zweckmäßig allgemein U-förmige Leichtmetall-Rohrstücke, die wie die gekrümmten Profilabschnitte der Strangpressprofile beiderseits des Batteriezellenstapels angeordnet sind, jeweils zwei längere gerade Rohrabschnitte und einen kürzeren Rohrabschnitt zwischen den längeren geraden Rohrabschnitten aufweisen und zwei benachbarte Strangpressprofile miteinander verbinden. Die beiden geraden Rohrabschnitte weisen einen Abstand auf, der etwa der Dicke von zwei Batteriezellen entspricht, so dass sich der kürzere Rohrabschnitt über die Höhe der beiden Batteriezellen erstreckt und den Zwischenraum zwischen diesen Zellen überbrückt.

Vorteilhaft sind die geraden Rohrabschnitte jedes Rohrstücks senkrecht zu den geradlinigen Profilabschnitten jedes Strangpressprofils ausgerichtet, deren Enden schlitzförmige Öffnungen in den geraden Rohrabschnitten durchsetzen und dichtend mit den geraden Rohrabschnitten verlötet oder verschweißt sind. Auf diese Weise lassen sich die Rohrstücke und die Strangpressprofile besonders einfach miteinander verbinden.

Um die Strangpressprofile und die Rohrstücke des Wärmetauschers beiderseits des Batteriezellenstapels aneinander vorbei zu führen, ist es von Vorteil, wenn an einer Seite des Stapels die gebogenen Profilabschnitte der Strangpressprofile der einlassseitigen Hälfte des Wärmetauschers jeweils einen der geraden Rohrabschnitte der auslassseitigen Hälfte des Wärmetauschers im Halbkreis umgeben und wenn an der anderen Seite des Stapels die gebogenen Profilabschnitte der Strangpressprofile der auslassseitigen Hälfte des Wärmetauschers jeweils einen der geraden Rohrabschnitte der einlassseitigen Hälfte des Wärmetauschers im Halbkreis umgeben.

Eine bevorzugte Ausgestaltung der Erfindung und für sich patentbegründende erste Erfindungsvariante sieht vor, dass an entgegengesetzten Seiten des Batteriemoduls jeweils eine Mehrzahl von Hohlprofilen angeordnet ist, welche die entgegengesetzten Seiten des Batteriemoduls bedecken. Die Hohlprofile dienen dazu, die Batteriezellen und den Wärmetauscher in Bezug zueinander auszurichten, so dass der Wärmetauscher und die Zellen nicht durch die Verspannung in einer definierten Lage gehalten werden brauchen. Die Hohlprofile sind auf gerade Rohrabschnitte des Wärmetauschers aufgeschoben und umgeben dazu jeweils einen Längskanal, dessen Innenquerschnitt vorzugsweise dem Außenquerschnitt der geraden Rohrabschnitte entspricht, auf die sie aufgeschoben werden. Die Hohlprofile werden vorteilhaft durch Extrudieren aus einem Kunststoff hergestellt. Die Hohlprofile können nach Bedarf aus einem Material mit wärmeisolierenden Eigenschaften, wie z.B. einem Polyurethankautschuk, oder aus einem Material mit wärmeübertragenden Eigenschaften hergestellt werden.

Gemäß einer anderen bevorzugten Ausgestaltung der Erfindung und für sich patentbegründenden zweiten Erfindungsvariante umfasst das Batteriemodul ein Modulgehäuse mit einem den Wärmetauscher umgebenden Modulrahmen aus formschlüssig ineinandergreifenden allgemein U-förmigen Rahmenklammern, die miteinander kämmen und bei ihrer Montage abwechselnd von entgegengesetzten Seiten her ineinander geschoben und miteinander in Eingriff gebracht werden. Die Rahmenklammern sind vorzugsweise aus Kunststoff gefertigte Spritzgussteile.

Neben dem Modulrahmen aus den U-förmigen Rahmenklammern umfasst das Modulgehäuse zweckmäßig einen Gehäusedeckel und einen Gehäuseboden und ist mittels Zugankern verspannt, die sich durch fluchtende Öffnungen in den Rahmenklammern, dem Gehäusedeckel und dem Gehäuseboden erstrecken und mit Schrauben angezogen werden.

Zur Überwachung der Batteriezellen umfasst das Batteriemodul ein Batteriemanagementsystem, das gemäß einer weiteren bevorzugten Ausgestaltung der Erfindung an einer Ober- oder Unterseite des Batteriezellenstapels in einem im Wärmekontakt mit dem Wärmetauscher befindlichen Gehäuse untergebracht ist, so dass es ebenfalls vom Kühlmedium gekühlt wird. Vorteilhaft liegt das Gehäuse des Batteriemanagementsystems gegen ein Strangpressprofil der einlassseitigen Hälfte des Wärmetauschers an, wo es von kälterem Kühlmedium gekühlt wird.

Bei dem Kühlmedium kann es sich grundsätzlich entweder um ein gasförmiges, dampfförmiges oder flüssiges Kühlmedium handeln.

Gas- oder dampfförmige Kühlmedien haben den Vorteil, dass sie durch einen Kältekreislauf zirkulierende Kältemittel sein können, während flüssige Kühlmedien den Vorteil einer höheren Wärmekapazität besitzen.

Im zuerst genannten Fall kann der Wärmetauscher des Kühlsystems in einem einzigen, vom Kühlmedium durchströmten Kältekreislauf angeordnet sein, der ein Kälteaggregat zum Kühlen des erwärmten Kühlmediums umfasst. Im zuletzt genannten Fall kann das Kühlsystem zwei Wärmetauscher in einem primären und einem sekundären Kältekreislauf umfassen, von denen sich der Wärmetauscher des sekundären Kältekreislaufs mäandrierend durch die Zwischenräume zwischen benachbarten Batteriezellen des Batteriemoduls erstreckt.

Um die beim Laden und Entladen der Batterie auftretenden Volumenänderungen der Zellen zu kompensieren und den von den Zugankern auf den Gehäusedeckel und den Gehäuseboden ausgeübten Druck gleichmäßig auf alle Batteriezellen des Stapels zu übertragen, ist es von Vorteil, wenn mindestens an der Oberseite oder an der Unterseite des Modulgehäuses eine reversibel kompressible Einlage zwischen den Gehäusedeckel oder den Gehäuseboden und den Batteriezellenstapel eingelegt wird. Vorteilhaft weist die Einlage dieselben Abmessungen wie das Gehäuse des Batteriemanagementsystems auf und wird an der entgegengesetzten Seite zu diesem in eine entsprechend geformte Ausnehmung im Gehäusedeckel oder den Gehäuseboden eingesetzt.

Im Folgenden wird die Erfindung anhand von zwei in der Zeichnung dargestellten Ausführungsbeispielen näher beschrieben.
Die Figuren 1a bis 1d zeigen verschiedene Ansichten eines erfindungsgemäßen Batteriemoduls mit modularem Aufbau;
die Figuren 2a bis 2d zeigen Ansichten eines Wärmetauschers eines Kühlsystems des Batteriemoduls;
Fig. 3 zeigt eine perspektivische Ansicht eines U-förmig gebogenen Aluminium-Strangpressprofils des Wärmetauschers;
Fig. 4 zeigt eine vergrößerte Schnittansicht des Strangpressprofils;
Fig. 5 zeigt eine Schnittansicht einer Verbindung zwischen dem Strangpressprofil und einem Aluminium-Rohrstück des Wärmetauschers;
die Figuren 6a bis 6d zeigen Ansichten des Wärmetauschers und eines Batteriezellenstapels des teilweise montierten Batteriemoduls;
Fig. 7a und 7b zeigen Ansichten des Wärmetauschers bei der Montage der Batteriezellen des Batteriezellenstapels;
die Figuren 8a bis 8d zeigen Ansichten des teilweise montierten Batteriemoduls nach einem weiteren Montageschritt;
Fig. 9a und 9b zeigen Ansichten des teilweise montierten Batteriemoduls während des weiteren Montageschritts;
die Figuren 10a bis 10d zeigen Ansichten des teilweise montierten Batteriemoduls nach einem noch weiteren Montageschritt;
Fig. 11a und 11b zeigen Ansichten des teilweise montierten Batteriemoduls während des noch weiteren Montageschritts;
die Figuren 12a bis 12d zeigen Ansichten des teilweise montierten Batteriemoduls während eines vorletzten Montageschritts;
Fig. 13a zeigt eine ähnliche perspektivische Ansicht wie Fig. 11b, jedoch von einem Batteriemodul mit zwei Batteriezellenstapeln;
Fig. 13b zeigt eine vergrößerte Ansicht des Details A aus Fig. 13a;
die Figuren 14a bis 14c zeigen Ansichten des teilweise montierten Batteriemoduls aus Fig. 13a während eines letzten Montageschritts;
Fig. 15a zeigt eine perspektivische Ansicht des teilweise montierten Batteriemoduls aus den Figuren 14a bis 14c;
Fig. 15b zeigt eine vergrößerte Ansicht des Details A aus Fig. 15a.

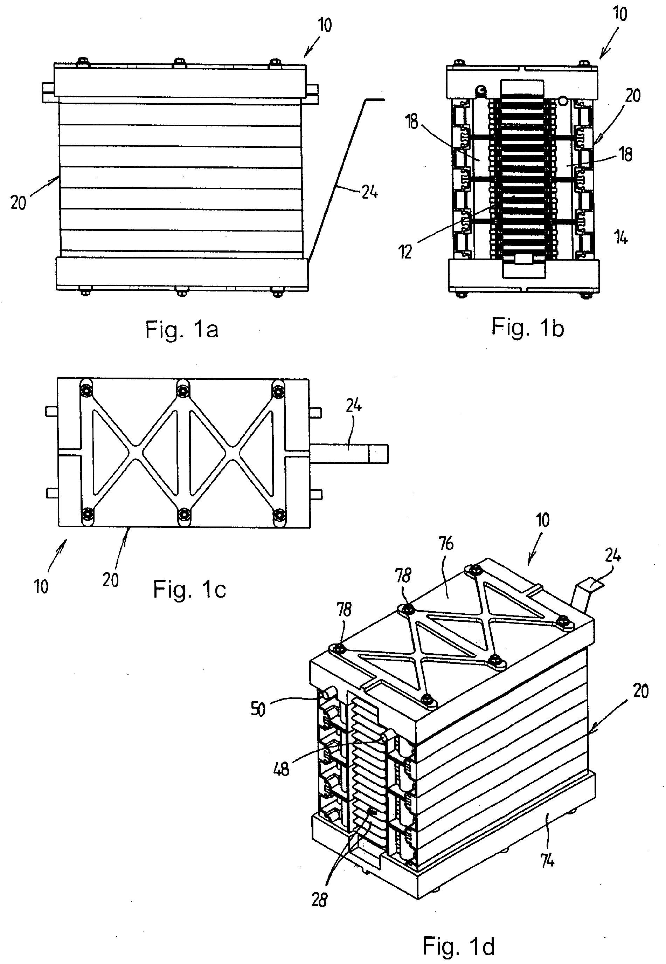

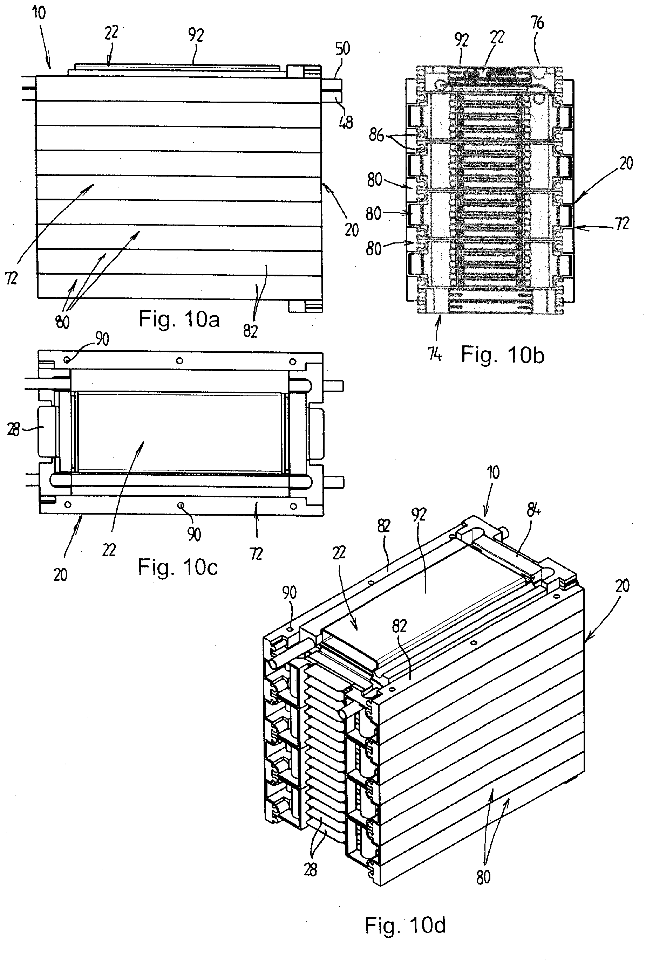

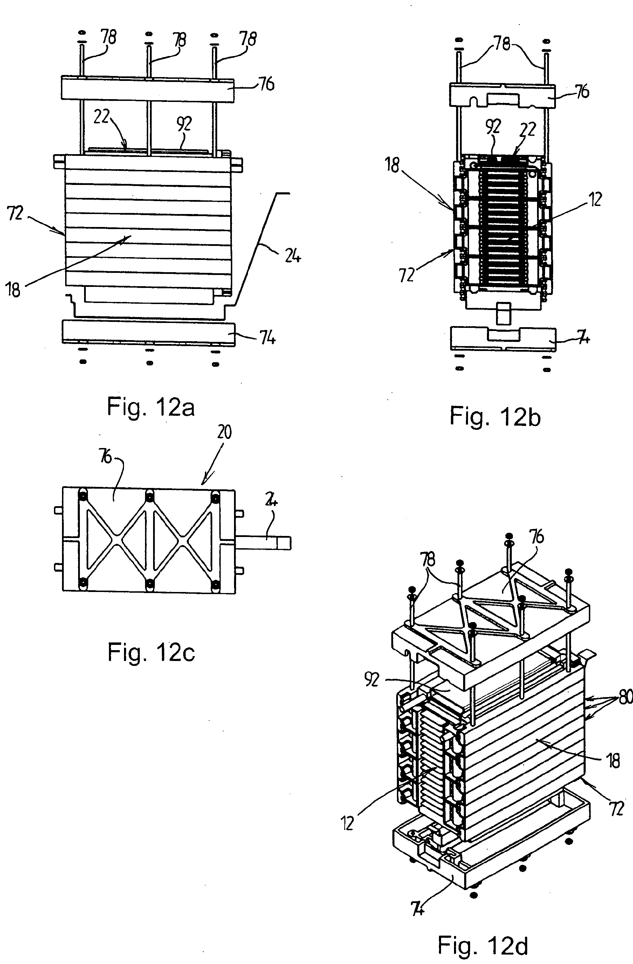

Dabei zeigen die Figuren 1a bis 1d, 2a bis 2d, Figuren 6a bis 6d, 8a bis 8d, 10a bis 10d und 12a bis 12d jeweils vier einander entsprechende Ansichten.

Das Batteriemodul 10 in den Figuren 1a bis 1d ist Teil einer Batterie, die aus in Serie und/oder parallel geschalteten Batteriemodulen 10 zusammengesetzt und mit einem Kühlsystem zur Kühlung der Batteriemodule 10 ausgestattet ist.

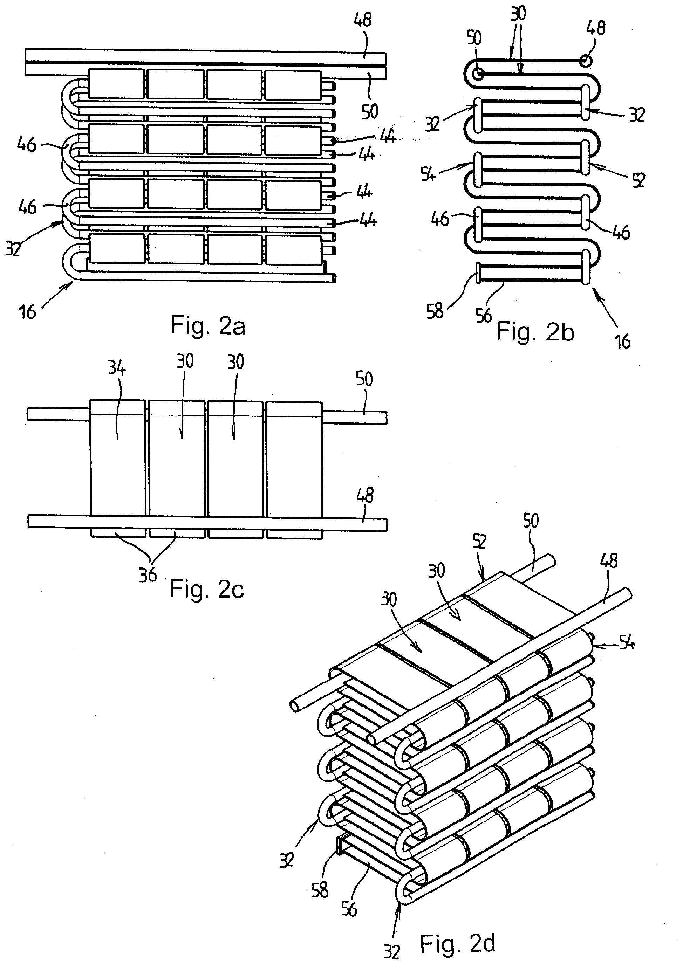

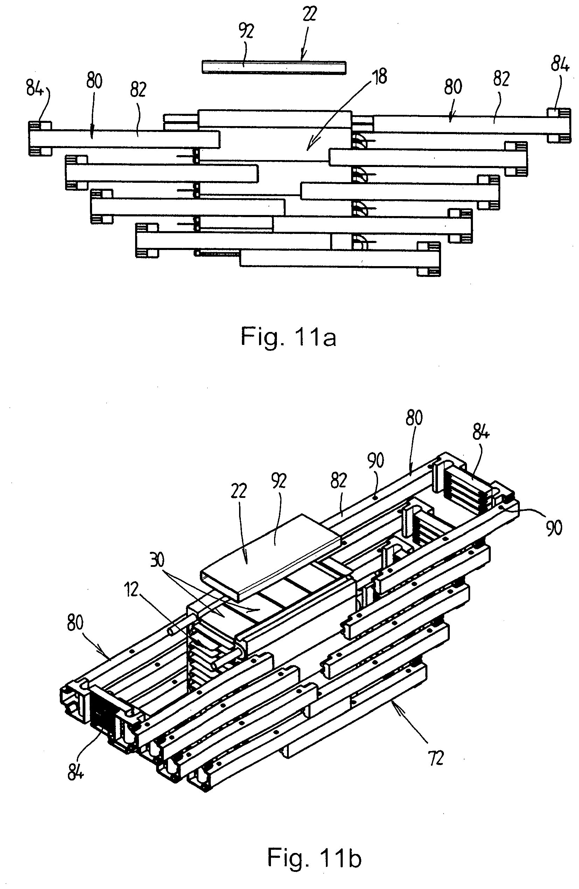

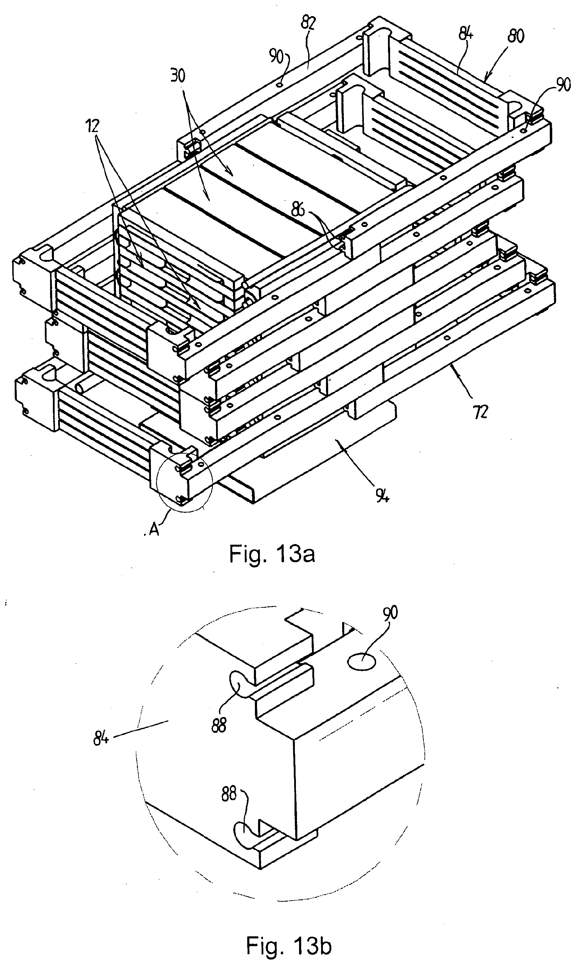

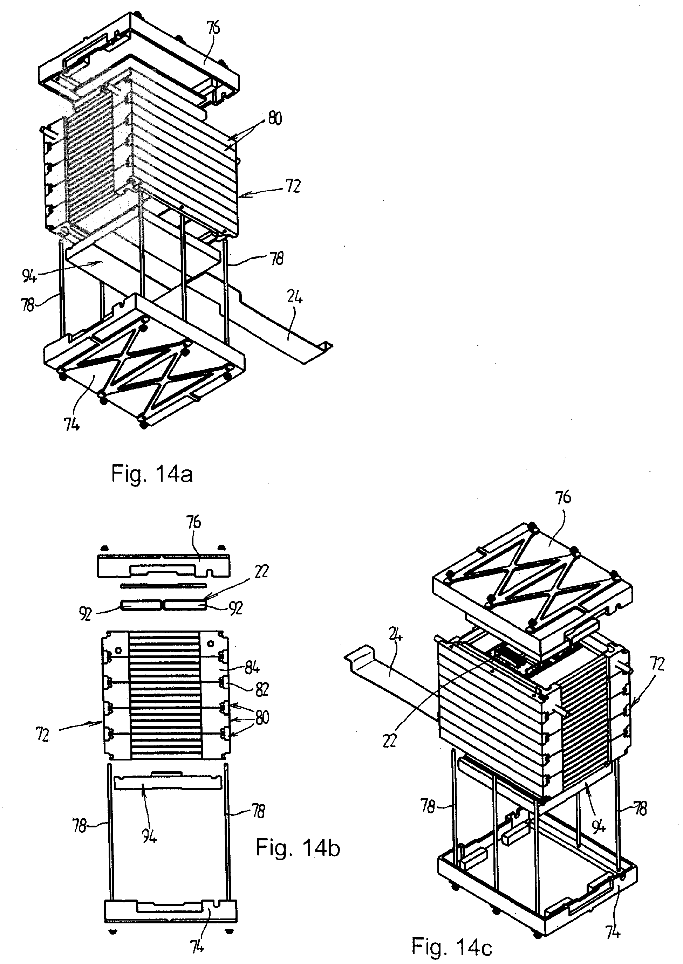

Jedes Batteriemodul 10 umfasst einen Batteriezellenstapel 12 aus einer Mehrzahl von in gleichen Abständen übereinander angeordneten Batteriezellen 14, einen von einem Kühlmedium durchströmten Wärmetauscher 16 (Fig. 2a bis 2d) als Teil des Kühlsystems, Ausricht- und Fixiermittel 18 an entgegengesetzten Seiten des Batteriemoduls 10, ein den Batteriezellenstapel 12 und die Ausricht- und Fixiermittel 18 umschließendes Modulgehäuse 20, ein Batteriemanagementsystem 22 (Fig. 11a und 11b) zur Überwachung und Regelung des Batteriemoduls 10, sowie eine Stromschiene 24 zur Kontaktierung des Batteriemoduls 10 mit einem benachbarten Batteriemodul 10 der Batterie. Während das Batteriemodul 10 in den Figuren 1 bis 12 einen einzigen Batteriezellenstapel 12 aufweist, umfasst das Batteriemodul 10 in den Figuren 13 bis 15 zwei nebeneinander angeordnete Batteriezellenstapel 12, besitzt jedoch ansonsten denselben Aufbau.

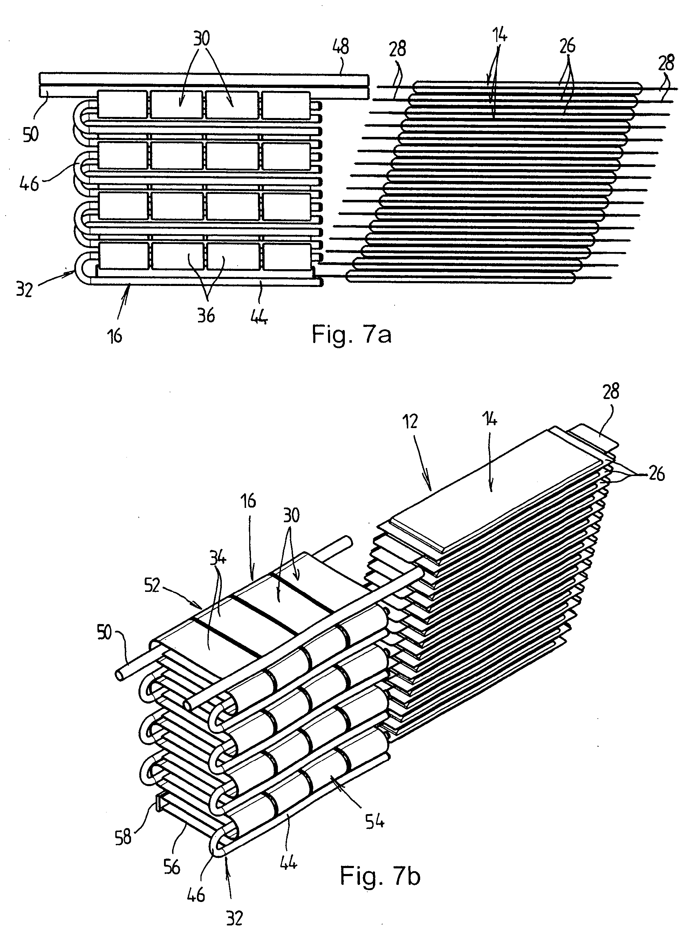

Wie am besten in Fig. 7a und 7b dargestellt, sind die Batteriezellen 14 flache, quaderförmige Pouch-Zellen mit einer nachgiebigen Umhüllung, die entlang eines um die Zellen 14 umlaufenden Randes 26 dicht verschweißt sind. Jede Zelle 14 hat zwei entgegengesetzte Breitseiten, zwei entgegengesetzte Schmalseiten sowie zwei entgegengesetzte Stirnseiten. Über beide Stirnseiten steht jeweils eine Anschlusszunge 28 über.

Die Zellen 14 sind innerhalb des Stapels 12 in deckungsgleicher paralleler Ausrichtung angeordnet, wobei sich zwischen den Breitseiten benachbarter Zellen 14 jeweils ein Zwischenraum (nicht dargestellt) mit konstanten Querschnittsabmessungen befindet. Die Zellen 14 des Stapels 12 können entsprechend der gewünschten Spannung parallel oder in Reihe geschaltet sein. Die Anzahl der Zellen 14 richtet sich nach dem vorhandenen Bauraum.

Bei den Batteriezellen 14 handelt es sich um wieder-aufladbare Lithium-Ionen-Zellen, die eine negative Elektrode, einen Elektrolyten, eine positive Elektrode und einen Separator enthalten und einen bekannten Aufbau besitzen, der hier nicht näher erläutert werden soll.

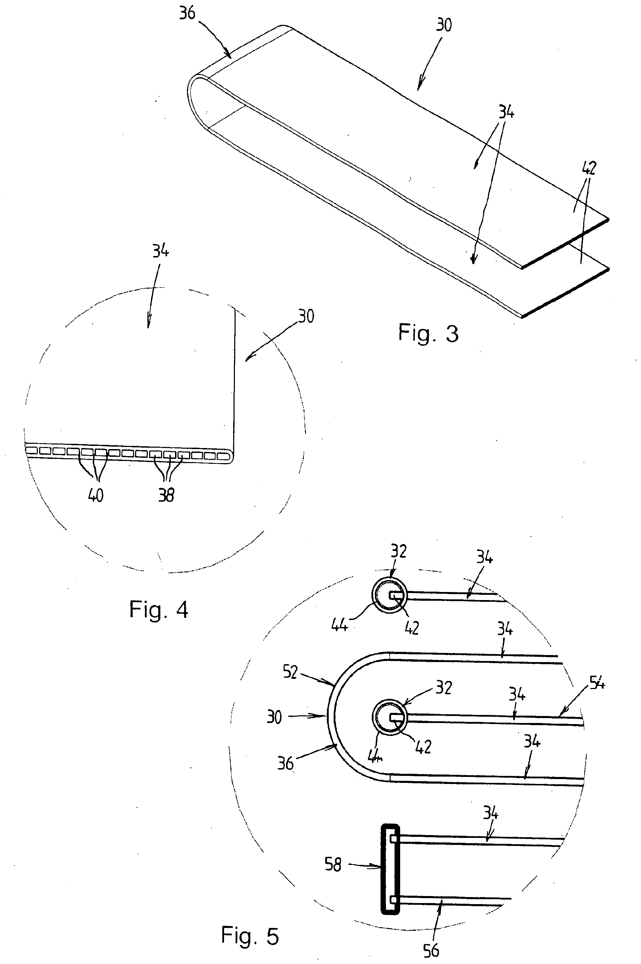

Der Wärmetauscher 16 besteht zum einen aus U-förmig gebogenen flachen hohlen Aluminium- Strangpressprofilen 30, wie am besten in Fig. 3 dargestellt, sowie zum anderen aus U-förmig gebogenen Aluminium-Rohrstücken 32, die jeweils die Enden von zwei gebogenen Aluminium-Strangpressprofilen 30 miteinander verbinden und sich mit den Strangpressprofilen 30 abwechseln, wie am besten in Fig. 2b und 2d dargestellt. Bei dem in der Zeichnung dargestellten Wärmetauscher 16 sind in Längsrichtung der Zellen 14 jeweils vier Strangpressprofilen 30 dicht nebeneinander angeordnet, jedoch kann die Anzahl auch größer oder kleiner sein.

Die Strangpressprofile 30 werden durch Biegen eines geraden Strangpressprofils hergestellt und weisen zwei gleichlange geradlinige Profilabschnitte 34 sowie einen gebogenen kürzeren Profilabschnitt 36 auf, der die beiden Profilabschnitte 34 miteinander verbindet, wie in Fig. 3 dargestellt. Die Strangpressprofile 30 besitzen zwei entgegengesetzte Breitseiten, die entlang der geradlinigen Profilabschnitte 34 parallel und eben sind. Wie in Fig. 4 dargestellt, umgibt jedes Strangpressprofil 30 mehrere nebeneinander angeordnete Kühlkanäle 38, die durch Trennwände 40 voneinander getrennt und an den Enden 42 der geradlinigen Profilabschnitte 34 offen sind.

Die Rohrstücke 32 bestehen jeweils aus zwei langen geraden Rohrabschnitten 44 sowie einem kurzen gebogenen Rohrabschnitt 46 in Form eines halbkreisförmigen Rohrbogens, der die beiden geraden Rohrabschnitte 44 miteinander verbindet und mit diesen verlötet oder verschweißt sein kann, wie z.B. in Fig. 2a dargestellt. Die Rohrstücke 32 besitzen einen kreisförmigen Rohrquerschnitt und sind an den Enden der gleichlangen geraden Abschnitte 44 geschlossen. Der Mittenabstand der beiden geraden Abschnitte 44 jedes Rohrstücks 32 entspricht dem Mittenabstand der beiden geradlinigen Profilabschnitte 34 jedes Strangpressprofils 30. Zudem ist jeder gerade Rohrabschnitt 44 senkrecht zu einem der geradlinigen Profilabschnitte 34 eines benachbarten Strangpressprofils ausgerichtet, dessen Ende 42 mit dem Rohrabschnitt 44 verbunden ist.

Zum Verbinden der Strangpressprofile 30 mit den Rohrstücken 32 weisen die geraden Rohrabschnitte 44 jedes Rohrstücks 32 jeweils an ihrer dem Batteriezellenstapel 12 zugewandten Seite mehrere langgestreckte schlitzförmige Öffnungen (nicht sichtbar) auf, deren Abmessungen geringfügig größer als die Querschnittsabmessungen der Strangpressprofile 30 sind. Jede der Öffnungen nimmt das offene Ende 42 von einem der geradlinigen Profilabschnitte 34 eines Strangpressprofils 30 auf, das ein wenig ins Innere des Rohrstücks 32 ragt, wie in Fig. 5 dargestellt. Das Ende 42 und das Rohrstück 32 werden um die Öffnung herum dicht miteinander verlötet oder verschweißt.

Ein erstes einlassseitiges Strangpressprofil 30 des Wärmetauschers 16 ist an der Oberseite des Batteriemoduls 10 auf dieselbe Weise an ein Zulaufrohr 48 angeschlossen, durch das aus einem Kältekreislauf (nicht dargestellt) ein Kühlmedium mit niedriger Temperatur in den Wärmetauscher 16 zugeführt wird. Ein letztes auslassseitiges Strangpressprofil 30 des Wärmetauschers 16 ist an der Oberseite des Batteriemoduls 10 auf dieselbe Weise an ein Rücklaufrohr 50 angeschlossen, durch das im Wärmetauscher 16 erwärmtes Kühlmedium zum Abkühlen in den Kältekreislauf zurückgeführt wird. Das Zulauf- und das Rücklaufrohr 48, 50 bestehen ebenfalls aus Aluminium.

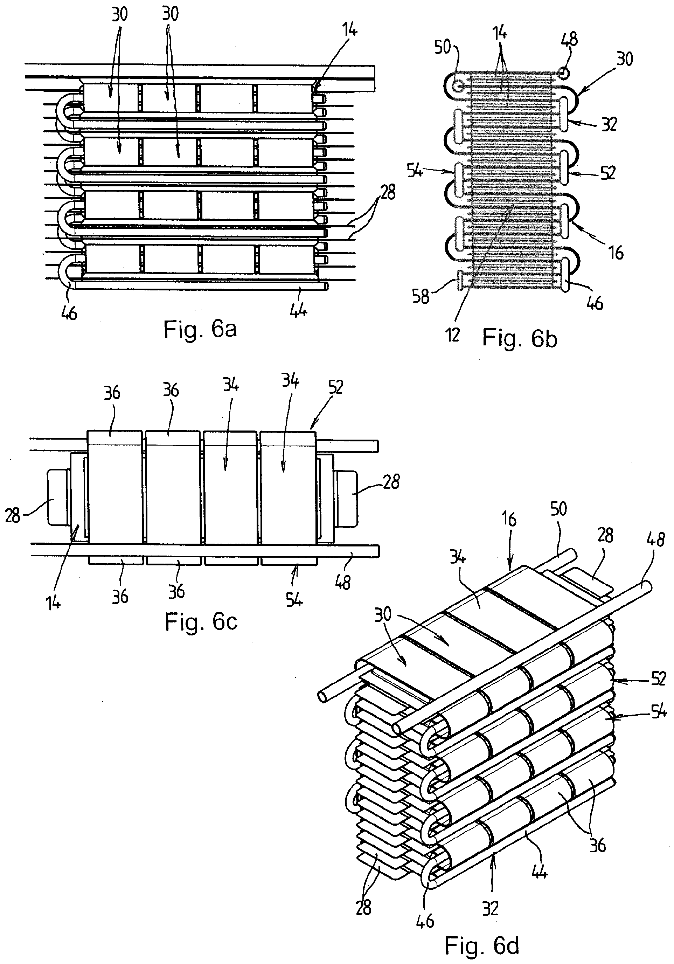

Wie am besten in den Figuren 6a bis 6d dargestellt, erstrecken sich die U-förmigen Strangpressprofile 30 des Wärmetauschers 16 mäandrierend durch die Zwischenräume zwischen den einzelnen Batteriezellen 14 des Batteriezellenstapels 12. Die Höhe der Zwischenräume entspricht der Dicke der Strangpressprofile 30, so dass jeder geradlinige Profilabschnitt 34 innerhalb des Stapels 12 mit seinen beiden Breitseiten vollflächig gegen die gegenüberliegende Breitseite einer darüber bzw. darunter angeordneten Zelle 14 anliegt, während deren entgegengesetzte Breitseite wiederum gegen den geradlinigen Profilabschnitt 34 eines anderen U-förmig gebogenen Strangpressprofils 30 anliegt. Dadurch werden beide Breitseiten jeder Zelle 14 vollflächig gekühlt, wodurch ein sehr großer Wärmeübergang ermöglicht wird.

Zwischen dem Zulaufrohr 48 und dem Rücklaufrohr 50 befinden sich eine einlassseitige Hälfte 52 und eine auslassseitige Hälfte 54 des Wärmetauschers 16, die im Wesentlichen denselben Aufbau besitzen, jedoch nach oben bzw. unten um die Höhe einer Zelle 14 gegeneinander versetzt sind. Zudem ragen die U-förmig gebogenen Strangpressprofile 30 der einlassseitigen Hälfte 52 bzw. der auslassseitigen Hälfte 54 abwechselnd von entgegengesetzten Seiten her zwischen die Zellen 14 des Stapels 12. Mit anderen Worten weisen die gebogenen Profilabschnitte 36 der Strangpressprofile 30 der beiden Hälften 52, 54 jeweils in entgegengesetzte Richtungen. An der Unterseite des Batteriemoduls 10 sind die beiden Hälften 52, 54 durch einen geraden Strangpressprofilabschnitt 56 miteinander verbunden. Wie am besten in Fig. 5 dargestellt, ist dieser Profilabschnitt 56 mit dem geradlinigen Profilabschnitt 34 eines benachbarten U-förmig gebogenen Strangpressprofils 30 durch ein Aluminium-Flachrohr 58 mit Rechteckquerschnitt verbunden, in das die Enden 42 der beiden Profilabschnitte 56, 34 in einer ähnlichen Weise ragen, wie zuvor beschrieben.

Durch den oben beschriebenen Aufbau wird zum Ersten erreicht, dass das durch den Wärmetauscher 16 strömende Kühlmedium im Gegenstrom durch die geradlinigen Profilabschnitte 34 an den entgegengesetzten Breitseiten jeder Batteriezelle 14 strömt. Zum Zweiten wird eine der zwei Breitseiten jeder Batteriezelle 14 durch das Kühlmedium in der einlassseitigen Hälfte 52 des Wärmetauschers 16 und die andere der beiden Breitseiten jeder Batteriezelle 14 durch das Kühlmedium in der auslassseitigen Hälfte 54 des Wärmetauschers 16 gekühlt. Zum Dritten strömt das Kühlmedium in der einlassseitigen Hälfte 52 des Wärmetauschers 16 mit allgemeiner Strömungsrichtung von oben nach unten durch jeden zweiten Zwischenraum zwischen den Zellen 14 des Stapels 12, während es in der auslassseitigen Hälfte 54 mit allgemeiner Strömungsrichtung von unten nach oben durch jeden zweiten Zwischenraum strömt. Dadurch wird bei Batteriezellen 14 nahe dem oberen Ende des Stapels 12 eine Breitseite von Kühlmedium mit relativ niedriger Temperatur und die andere Breitseite von Kühlmedium mit relativ hoher Temperatur gekühlt, während bei Batteriezellen 14 nahe dem unteren Ende des Stapels 12 beide Breitseiten von Kühlmedium mit mittlerer Temperatur gekühlt werden.

Die U-förmigen Leichtmetall-Rohrstücke 32 sind seitlich vom Batteriezellenstapel 12 angeordnet, wobei sich ihre Anzahl an den entgegengesetzten Seiten des Batteriezellenstapels 12 bzw. des Wärmetauschers 16 um ein Rohrstück 32 unterscheidet. Um die Strangpressprofile 30 und die Rohrstücke 32 dort aneinander vorbei zu führen, sind an einer Seite des Stapels 12 die gebogenen Profilabschnitte 36 der Strangpressprofile 30 der einlassseitigen Hälfte 52 des Wärmetauschers 16 jeweils im Halbkreis um einen der geraden Abschnitte 44 eines Rohrstücks 32 der auslassseitigen Hälfte 54 des Wärmetauschers 16 herumgeführt, während an der anderen Seite die gebogenen Profilabschnitte 36 der Strangpressprofile 30 der auslassseitigen Hälfte 54 des Wärmetauschers 16 jeweils im Halbkreis um einen der geraden Abschnitte 44 eines Rohrstücks 32 der einlassseitigen Hälfte 52 des Wärmetauschers 16 herumgeführt sind.

Die beschriebene Anordnung gestattet es, die einzelnen Batteriezellen 14 von einer der beiden entgegengesetzten Stirnseiten des Wärmetauschers 16 her in die Zwischenräume zwischen benachbarten geradlinigen Profilabschnitten 34 der Strangpressprofile 30 einzuführen, wie in Fig. 7a und 7b schematisch dargestellt, bis im Wesentlichen nur noch ihre Anschlusszungen 28 über die Stirnseiten des Wärmetauschers 16 überstehen.

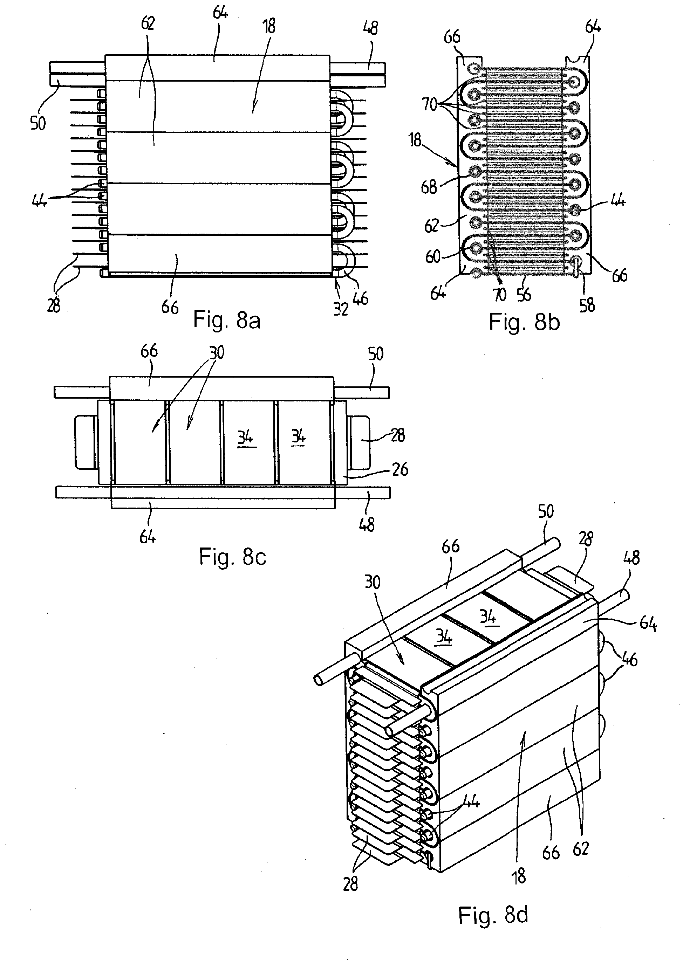

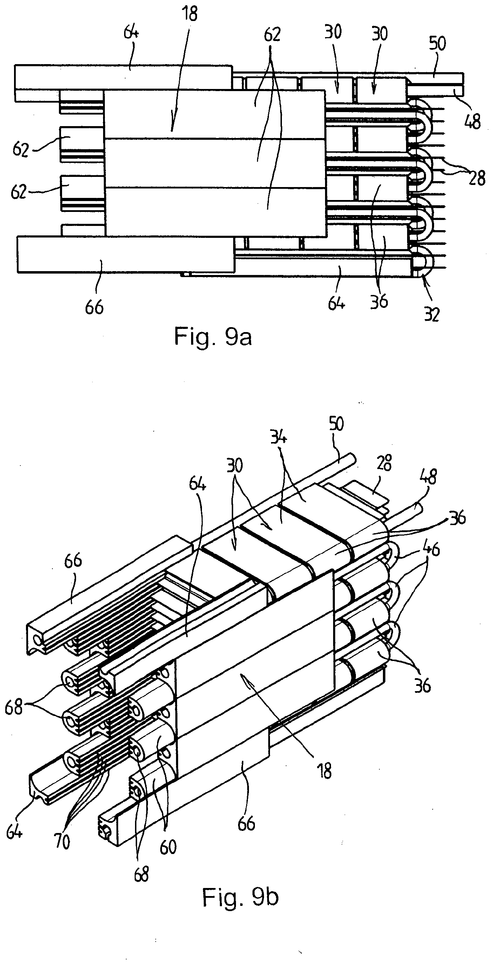

Die Ausricht- und Fixiermittel 18 an den entgegengesetzten Seiten des Batteriezellenstapels 12 dienen dazu, die einzelnen Batteriezellen 14 gegenseitig und in Bezug zum Wärmetauscher 16 auszurichten und in der gewünschten Ausrichtung festzuhalten. Wie am besten in den Figuren 8a bis 8d, 9a und 9b dargestellt, bestehen die Ausricht- und Fixiermittel 18 jeweils aus einer Mehrzahl von langgestreckten Hohlprofilen 60, 62, 64, welche die nach außen über den Stapel 12 überstehenden gebogenen Profiabschnitte 36 der Strangpressprofile 30 und die geraden Rohrabschnitte 44 der Rohrstücke 32 umgeben und welche die Schmalseiten des Wärmetauschers 16 bedecken.

Die Hohlprofile 60, 62, 64 besitzen einen gleichbleibenden Querschnitt und können z.B. durch Extrudieren aus einem Polyurethankautschuk hergestellt werden. Die Hohlprofile 60, 62, 64 umgeben jeweils einen im Querschnitt kreisförmigen Kanal 68, dessen Innendurchmesser etwas größer als der Außendurchmesser der geraden Rohrabschnitte 44 ist. Wie in Fig. 9a und 9b dargestellt, werden die Hohlprofile 60, 62 von den geschlossenen Enden der geraden Rohrabschnitte 44 her auf die letzteren aufgeschoben. Um die Zwischenräume zwischen den gebogenen Profilabschnitten 36 der Strangpressprofile 30 und den geraden Rohrabschnitten 44 weitestgehend auszufüllen, müssen die extrudierten Hohlprofile 60, 62 verschiedene Querschnitte aufweisen, wie am besten in Fig. 8b dargestellt. Das Hohlprofil 60 besitzt einen etwa halbkreisförmigen Querschnitt und wird jeweils auf einen der geraden Rohrabschnitte 44 aufgeschoben, um den der gebogene Profilabschnitt 36 eines Strangpressprofils 30 im Halbkreis herumgeführt ist. Das Hohlprofil 62 besitzt einen etwa ambossförmigen Querschnitt und wird jeweils auf den benachbarten geraden Rohrabschnitt 44 aufgeschoben, um den kein gebogener Profilabschnitt 36 herumgeführt ist. Von den anderen Hohlprofilen 64, 66 ist jeweils eines an der Oberseite und an der Unterseite des Wärmetauschers 16 angeordnet.

Die Hohlprofile 60, 62, 64, 66 sind an ihrer dem Stapel 12 zugewandten Seite mit Schlitzen 70 versehen, die teilweise zur Aufnahme der umlaufenden Ränder 26 der Zellen 14 dienen und sich teilweise vom Kanal 68 aus durch das Hohlprofil 60, 62, 64 nach außen verlaufen, um das Aufschieben des Hohlprofils 60, 62, 64 zu erleichtern.

Wie am besten in den Figuren 1a bis 1d und 10a bis 15d dargestellt, besteht das Modulgehäuse 20 im Wesentlichen aus einem Gehäuserahmen 72, der den Batteriezellenstapel 12, den Wärmetauscher 16 und die Hohlprofile 60, 62, 64, 66 an den Schmalseiten und an den Stirnseiten des Stapels 12 umgibt, einem Gehäuseboden 74 und einem Gehäusedeckel 76 an der Unter- bzw. Oberseite des Gehäuses 20, sowie Zugankern 78 zum Verspannen des Gehäuses 20 und der Zellen 14.

Wie am besten in Fig. 11a und 11b sowie 13a und 13b für das Batteriemodul 10 mit einem bzw. zwei Batteriezellenstapeln 12 dargestellt, besteht der Gehäuserahmen 72 aus einer Mehrzahl von flachen, übereinander angeordneten allgemein U-förmigen Rahmenklammern 80, die abwechselnd von entgegengesetzten Stirnseiten her auf den Batteriezellenstapel 12, den Wärmetauscher 16 und die Hohlprofile 60, 62, 64, 66 aufgeschoben werden. Sowohl die Schenkel 82 als auch die Joche 84 der Rahmenklammern 80 besitzen parallele ebene Ober- und Unterseiten, die nach dem Aufschieben flächig gegen die Unter- bzw. Oberseiten benachbarter Rahmenklammern 80 anliegen. Die Höhe jedes Schenkels 82 einer Rahmenklammer 80 entspricht der halben Höhe des Jochs 84 der Rahmenklammer 80, so dass sämtliche Rahmenklammern 80 gemeinsam den geschlossenen Rahmen 72 bilden, wenn die freien Enden der Schenkel 82 der Rahmenklammern 80 mit den Jochen 84 benachbarter Klammern 80 formschlüssig in Eingriff treten, um die Rahmenklammern 80 vorläufig miteinander zu verbinden. Die Rahmenklammern 80 bestehen aus spritzgegossenem Kunststoff und weisen an ihren Jochen 84 Aussparungen für die Anschlusszungen 28 sowie Kabeldurchführungen für zum Batteriemanagementsystem 22 führende Kabel auf.

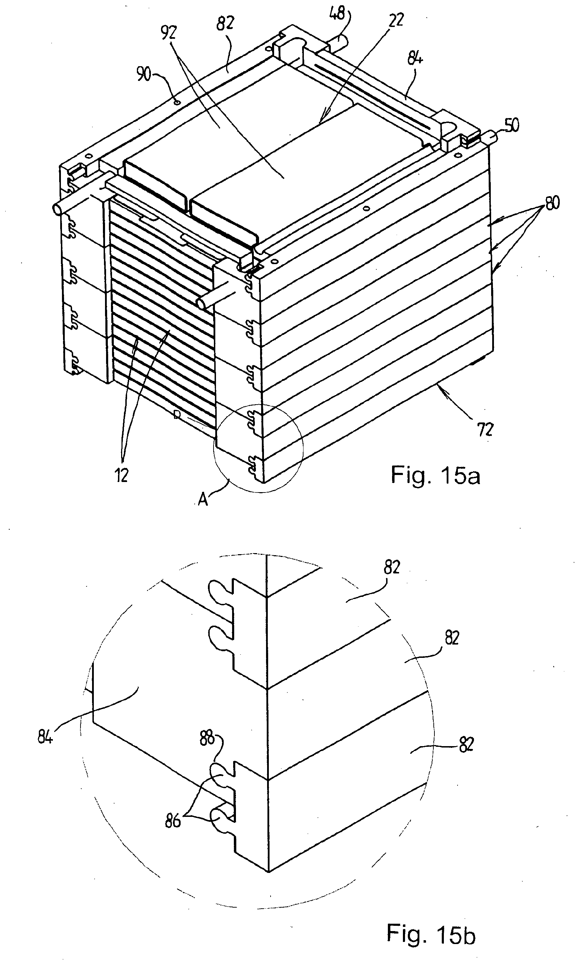

Wie am besten in Fig. 13a und 13b sowie 15a und 15b dargestellt, sind die freien Enden der Schenkel 82 der Rahmenklammern 80 jeweils mit zwei übereinander angeordneten Vorsprüngen 86 mit schwalbenschwanzförmigem Querschnitt versehen. Das Joch 84 von jeder Rahmenklammer 80 ist gegenüber von den freien Enden der Schenkel 82 zweier benachbarter Rahmenklammern 80 mit einer Aufnahmenut 88 mit einem entsprechenden schwalbenschwanzförmigen Querschnitt versehen. Beim Zusammenschieben der Rahmenklammern 80 treten die beiden Vorsprünge 86 in die Aufnahmenuten 88 der Joche 84 von zwei übereinander angeordneten Rahmenklammern 80 ein, wodurch diese Rahmenklammern 80 in Bezug zueinander ausgerichtet und zusammengehalten werden.

Zum Verspannen des Modulgehäuses 20 sind die Schenkel 82 der Rahmenklammern 80, der Gehäusedeckel 76 und der Gehäuseboden 74 mit Bohrungen 90 versehen, die nach dem Zusammensetzen des Modulgehäuses 20 miteinander fluchten und zur Aufnahme der Zuganker 78 dienen.

Das Batteriemanagementsystem 22 besitzt jeweils ein flaches quaderförmiges Gehäuse 92, das in eine nach unten offene Vertiefung des Gehäusedeckels 76 eingelassen ist. Nach der Montage des Modulgehäuses 20 liegt das Gehäuse 92 mit seiner ebenen Unterseite auf der ebenen Oberseite des obersten geradlinigen Profilabschnitts 34 des ersten einlassseitigen Strangpressprofils 30 auf, so dass es vom Kühlmedium mit der niedrigsten Temperatur gekühlt wird. Das Batteriemodul 10 mit den zwei Batteriestapeln 12 enthält zwei Gehäuse 92, die nebeneinander in einer Vertiefung des Gehäusedeckels 76 angeordnet sind und beide gegen die ebene Oberseite des obersten geradlinigen Profilabschnitts 34 des ersten einlassseitigen Strangpressprofils 30 anliegen, wie in Fig. 15a dargestellt. Die Komponenten des Batteriemanagementsystems 22 können dann entweder in einem oder verteilt in beiden Gehäusen 92 untergebracht werden.

Der Gehäuseboden 74 ist an seiner Oberseite mit einer entsprechenden, nach oben offenen Vertiefung versehen, in die eine Einlage 94 aus einem reversibel kompressiblen Schaumstoff eingelegt wird. Diese Einlage 94 wird bei der Verspannung des Modulgehäuses 20 kraftschlüssig einerseits gegen den Gehäuseboden 74 und andererseits zusammen mit der Stromschiene 24 gegen den gegenüberliegenden Strangpressprofilabschnitt 56 angepresst, wodurch eine gleichmäßige Kraftübertragung auf die Zellen 14 erzielt wird. Zusammen mit der Verformbarkeit des Wärmetauschers 16 gestattet die Einlage 94 eine gewisse Volumenausdehnung der Zellen 14 beim Laden und Entladen. Die Vertiefungen im Gehäusedeckel 76 und im Gehäuseboden 74 haben identische Abmessungen, so dass das Batteriemanagementsystem 22 bzw. die Einlage 94 bei Bedarf getauscht und damit wahlweise an der Ober- oder Unterseite des Batteriemoduls 10 positioniert werden können.

Zum mechanischen Verbinden der einzelnen Batteriemodule 10, zum Verbinden von deren Wärmetauschern 16 sowie zum elektrischen Verbinden von deren Stromschienen 24 dient jeweils ein geeignetes Stecksystem (nicht dargestellt). Die Stecksysteme sind so konzipiert, dass sich die einzelnen Batteriemodule 10 nach dem Baukastensystem zu größeren Batterien zusammensetzen lassen, wobei ein falscher Zusammenbau dadurch verhindert wird, dass sich die Komponenten jedes der Stecksysteme nur bei einer ordnungsgemäßen Ausrichtung der Batteriemodule verbinden lassen.

## Patentansprüche

1. Batteriekühlsystem mit einem von einem Kühlmedium durchströmten Wärmetauscher (16) zur Kühlung einer Mehrzahl von flachen, im Abstand parallel angeordneten Batteriezellen (14) eines Batteriemoduls (10), wobei sich der vom Kühlmedium durchströmte Wärmetauscher (16) mäandrierend durch Zwischenräume zwischen benachbarten Batteriezellen (14) des Batteriemoduls (10) erstreckt und flächig gegen Oberflächen der benachbarten Batteriezellen (14) anliegt, **dadurch gekennzeichnet, dass** eine der entgegengesetzten Oberflächen jeder Batteriezelle (14) nur gegen eine einlassseitige Hälfte (52) des Wärmetauschers (16) anliegt, und dass die andere der entgegengesetzten Oberflächen jeder Batteriezelle (14) nur gegen eine auslassseitige Hälfte (54) des Wärmetauschers (16) anliegt.

2. Batteriekühlsystem nach Anspruch 1, **dadurch gekennzeichnet, dass** eine der entgegengesetzten Oberflächen jeder Batteriezelle (14) gegen eine von oben nach unten durchströmte Hälfte (52) des Wärmetauschers (16) anliegt, und dass die andere der entgegengesetzten Oberflächen jeder Batteriezelle (14) gegen eine von unten nach oben durchströmte Hälfte (54) des Wärmetauschers (16) anliegt.

3. Batteriekühlsystem nach Anspruch 1 oder 2, **dadurch gekennzeichnet, dass** das Kühlmedium die einlassseitige Hälfte (52) und die auslassseitige Hälfte (54) des Wärmetauschers (16) mit entgegengesetzter Strömungsrichtung durchströmt.

4. Batteriekühlsystem nach einem der vorangehenden Ansprüche, **dadurch gekennzeichnet, dass** der Wärmetauscher (16) flache hohle Leichtmetall-Strangpressprofile (30) mit geradlinigen Profilabschnitten (34) umfasst, die sich durch die Zwischenräume zwischen den benachbarten Batteriezellen (14) erstrecken.

5. Batteriekühlsystem nach Anspruch 4, **dadurch gekennzeichnet, dass** zwischen zwei geradlinigen Profilabschnitten (34) jedes Strangpressprofils (30) jeweils zwei Batteriezellen (14) angeordnet sind, zwischen die sich ein geradliniger Profilabschnitt (34) eines benachbarten Strangpressprofils (30) erstreckt.

6. Batteriekühlsystem nach Anspruch 4 oder 5, **dadurch gekennzeichnet, dass** jede Batteriezelle (14) zwischen einem Strangpressprofilabschnitt (34) der einlassseitigen Hälfte (52) und einem Strangpressprofilabschnitt (34) der auslassseitigen Hälfte (54) des Wärmetauschers (16) angeordnet ist und dass das Kühlmedium den Wärmetauscher (16) an den entgegengesetzten Oberflächen jeder Batteriezelle (14) im Gegenstrom durchströmt.

7. Batteriekühlsystem nach einem der Ansprüche 3 bis 6, **dadurch gekennzeichnet, dass** die Strangpressprofile (30) U-förmig gebogen sind und abwechselnd von entgegengesetzten Seiten her in die Zwischenräume zwischen den Batteriezellen (14) ragen.

8. Batteriekühlsystem nach einem der Ansprüche 3 bis 7, **dadurch gekennzeichnet, dass** der Wärmetauscher (16) außerhalb der Zwischenräume Rohrstücke (32) umfasst, die benachbarte Strangpressprofile (30) miteinander verbinden.

9. Batteriekühlsystem nach Anspruch 8, **dadurch gekennzeichnet, dass** die Rohrstücke (32) schlitzförmige Öffnungen zur dichtenden Aufnahme von offenen Enden (42) der geradlinigen Profilabschnitte (34) aufweisen.

10. Batteriemodul (10) mit einer Mehrzahl von flachen, im Abstand parallel angeordneten Batteriezellen (14), sowie einem Batteriekühlsystem nach einem der vorangehenden Ansprüche zur Kühlung der Batteriezellen (14) des Batteriemoduls (16).

11. Batteriemodul (10) nach Anspruch 10, **gekennzeichnet durch** eine Mehrzahl von Hohlprofilen (60, 62, 64, 66) aus einem thermisch isolierenden Material, die entgegengesetzte Seiten des Wärmetauschers (16) bedecken und auf gerade Abschnitte (42) von Rohrstücken (32) des Wärmetauschers (16) aufgeschoben sind.

12. Batteriemodul (10) nach Anspruch 10 oder 11, **gekennzeichnet durch** ein Modulgehäuse (20) mit einem Gehäuserahmen (76) aus formschlüssig ineinandergreifenden allgemein U-förmigen Rahmenklammern (80), die den Wärmetauscher (16) abwechselnd von entgegengesetzten Seiten umgreifen.

13. Batteriemodul nach Anspruch 12, **dadurch gekennzeichnet, dass** das Modulgehäuse (20) einen Gehäusedeckel (76) und einen Gehäuseboden (74) umfasst und mittels Zugankern (78) verspannt ist, die sich durch fluchtende Öffnungen der Rahmenklammern (80), des Gehäusedeckels (76) und des Gehäusebodens (74) erstrecken.

14. Batteriemodul nach einem der Ansprüche 10 bis 13, **gekennzeichnet durch** ein Batteriemanagementsystem (22), das an einer Ober- oder Unterseite des Wärmetauschers (16) in einem flächig gegen den Wärmetauscher (16) anliegenden Gehäuse (92) untergebracht ist.

15. Batteriemodul (10) nach einem der Ansprüche 10 bis 14, **gekennzeichnet durch** eine an einer Unter- oder Oberseite des Wärmetauschers (16) angeordnete Einlage (94) aus einem reversibel kompressiblen Material.

## Claims

1. A battery cooling system having a heat exchanger (16) through which a cooling medium flows for cooling a plurality of flat battery cells (14) of a battery module (10) disposed in parallel and at intervals, wherein the heat exchanger (16) through which the cooling medium flows extends in meandering fashion through gaps between adjacent battery cells (14) of the battery module (10) and rests flat against surfaces of the adjacent battery cells (14), **characterized in that** one of the opposing surfaces of each battery cell (14) abuts only an inlet-side half (52) of the heat exchanger (16), and the other of the opposing surfaces of each battery cell (14) abuts only an outlet-side half (54) of the heat exchanger (16).

2. The battery cooling system according to claim 1, **characterized in that** one of the opposite surfaces of each battery cell (14) abuts against a half (52) of the heat exchanger (16) through which flow occurs from top to bottom, and that the other of the opposite surfaces of each battery cell (14) abuts against a half (54) of the heat exchanger (16) through which flow occurs from bottom to top.

3. The battery cooling system according to claim 1 or 2, **characterized in that** the cooling medium flows through the inlet-side half (52) and the outlet-side half (54) of the heat exchanger (16) in opposite flow directions.

4. The battery cooling system according to one of the aforementioned claims, **characterized in that** the heat exchanger (16) comprises flat hollow light metal extruded profiles (30) with rectilinear profile sections (34), which extend through the gaps between the adjacent battery cells (14).

5. The battery cooling system according to claim 4, **characterized in that** between two rectilinear profile sections (34) of each extruded profile (30) two battery cells (14) are respectively disposed between which a rectilinear profile section (34) of an adjacent extruded profile (30) extends.

6. The battery cooling system according to claim 4 or 5, **characterized in that** each battery cell (14) is disposed between an extruded profile section (34) of the inlet side half (52) and an extruded profile section (34) of the outlet side half (54) of the heat exchanger (16) and that the cooling medium flows through the heat exchanger (16) in countercurrent at the opposite surfaces of each battery cell (14).

7. The battery cooling system according to one of the claims 3 to 6, **characterized in that** the extruded profiles (30) are bent in a U-shape and project alternately from opposite sides into the gaps between the battery cells (14).

8. The battery cooling system according to one of the claims 3 to 7, **characterized in that** the heat exchanger (16) comprises, outside of the gaps, pipe sections (32) which connect adjacent extruded profiles (30) with each other.

9. The battery cooling system according to claim 8, **characterized in that** the pipe sections (32) comprise slot-shaped openings for sealingly receiving open ends (42) of the rectilinear profile sections (34).

10. A battery module (10) comprising a plurality of flat battery cells (14) disposed in parallel at intervals, and a battery cooling system according to one of the aforementioned claims for cooling the battery cells (14) of the battery module (16).

11. The battery module (10) according to claim 10, **characterized by** a plurality of hollow sections (60, 62, 64, 66) of a thermally insulating material covering opposite sides of the heat exchanger (16) and slid onto straight sections (42) of pipe sections (32) of the heat exchanger (16).

12. The battery module (10) according to claim 10 or 11, **characterized by** a module housing (20) having a housing frame (76) of generally U-shaped frame clamps (80) that engage each other in a form-fitting manner and alternately grasp the heat exchanger (16) from opposite sides.

13. The battery module according to claim 12, **characterized in that** the module housing (20) comprises a housing cover (76) and a housing base (74) and is braced by means of tie anchors (78) extending through aligned openings of the frame clamps (80), the housing cover (76) and the housing base (74).

14. The battery module according to one of the claims 10 to 13, **characterized by** a battery management system (22), which is accommodated at an upper or lower side of the heat exchanger (16) in a housing (92) lying flat against the heat exchanger (16).

15. The battery module (10) according to one of claims 10 to 14, **characterized by** an insert (94) of a reversibly compressible material disposed on a lower or upper side of the heat exchanger (16).

## Revendications

1. Système de refroidissement de batterie avec un échangeur de chaleur (16) traversé par un fluide de refroidissement pour refroidir une pluralité de cellules de batterie (14) plates d'un module de batterie (10), qui sont disposées parallèlement et à distance les unes des autres, l'échangeur de chaleur (16) traversé par le fluide de refroidissement s'étendant en méandres à travers des espaces intermédiaires entre des cellules de batterie (14) adjacentes du module de batterie (10) et reposant à plat contre des surfaces des cellules de batterie (14) adjacentes, **caractérisé en ce que** l'une des surfaces opposées de chaque cellule de batterie (14) ne bute que contre une moitié côté entrée (52) de l'échangeur de chaleur (16), et l'autre des surfaces opposées de chaque cellule de batterie (14) ne bute que contre une moitié côté sortie (54) de l'échangeur de chaleur (16).

2. Système de refroidissement de batterie selon la revendication 1, **caractérisé en ce que** l'une des surfaces opposées de chaque cellule de batterie (14) repose contre une moitié (52) de l'échangeur de chaleur (16) traversée de haut en bas, et **en ce que** l'autre des surfaces opposées de chaque cellule de batterie (14) repose contre une moitié (54) de l'échangeur de chaleur (16) traversée de base en haut.

3. Système de refroidissement de batterie selon la revendication 1 ou 2, **caractérisé en ce que** le fluide de refroidissement circule à travers la moitié côté entrée (52) et la moitié côté sortie (54) de l'échangeur de chaleur (16) selon un sens d'écoulement opposé.

4. Système de refroidissement de batterie selon l'une des revendications précédentes, **caractérisé en ce que** l'échangeur de chaleur (16) comprend des profilés extrudés creux plats en métal léger (30) ayant des sections de profilé rectiligne (34) s'étendant à travers les espaces intermédiaires entre les cellules de batterie adjacentes (14).

5. Système de refroidissement de batterie selon la revendication 4, **caractérisé en ce que** deux cellules de batterie (14) sont disposées respectivement entre deux sections de profilé rectiligne (34) de chaque profilé extrudé (30), entre lesquelles s'étend une section de profilé rectiligne (34) d'un profilé extrudé (30) adjacent.

6. Système de refroidissement de batterie selon la revendication 4 ou 5, **caractérisé en ce que** chaque cellule de batterie (14) est disposée entre une section de profilé extrudé (34) de la moitié côté entrée (52) et une section de profilé extrudé (34) de la moitié côté sortie (54) de l'échangeur de chaleur (16), et **en ce que** le fluide de refroidissement circule à travers l'échangeur de chaleur (16) à contre-courant au niveau des surfaces opposées de chaque cellule de batterie (14).

7. Système de refroidissement de batterie selon l'une des revendications 3 à 6, **caractérisé en ce que** les profilés extrudés (30) sont courbés en forme de U et font saillie alternativement depuis des côtés opposés dans les espaces intermédiaires entre les cellules de batterie (14).

8. Système de refroidissement de batterie selon l'une quelconque des revendications 3 à 7, **caractérisé en ce que** l'échangeur de chaleur (16) comprend, à l'extérieur des espaces intermédiaires, des pièces tubulaires (32) qui relient entre eux des profilés extrudés (30) adjacents.

9. Système de refroidissement de batterie selon la revendication 8, **caractérisé en ce que** les pièces tubulaires (32) présentent des ouvertures en forme de fentes pour recevoir de manière étanche les extrémités ouvertes (42) des sections de profilé rectiligne (34).

10. Module de batterie (10) avec une pluralité d'éléments de batterie plats (14) disposés parallèlement et à distance les uns des autres, et un système de refroidissement de batterie selon l'une des revendications précédentes pour refroidir les éléments de batterie (14) du module de batterie (16).

11. Module de batterie (10) selon la revendication 10, **caractérisé par** une pluralité de profilés creux (60, 62, 64, 66) en un matériau thermiquement isolant qui recouvrent des côtés opposés de l'échangeur de chaleur (16) et sont glissés sur des sections droites (42) de pièces tubulaires (32) de l'échangeur de chaleur (16).

12. Module de batterie (10) selon la revendication 10 ou 11, **caractérisé par** un boîtier de module (20) avec un cadre de boîtier (76) constitué de clips de cadre (80) généralement en forme de U et s'emboîtant par liaison de forme, qui enserrent alternativement l'échangeur de chaleur (16) par des côtés opposés.

13. Module de batterie selon la revendication 12, **caractérisé en ce que** le boîtier de module (20) comprend un couvercle de boîtier (76) et un fond de boîtier (74) et est serré au moyen de tirants (78) qui s'étendent à travers des ouvertures alignées des clips de cadre (80), du couvercle de boîtier (76) et du fond de boîtier (74).

14. Module de batterie selon l'une des revendications 10 à 13, **caractérisé par** un système de gestion de batterie (22) qui est logé sur un côté supérieur ou inférieur de l'échangeur de chaleur (16) dans un boîtier (92) qui s'appuie à plat contre l'échangeur de chaleur (16).

15. Module de batterie (10) selon l'une quelconque des revendications 10 à 14, **caractérisé par** un insert (94) d'un matériau compressible de manière réversible disposé sur un côté inférieur ou supérieur de l'échangeur de chaleur (16).
